# EUROPÄISCHE PATENTANMELDUNG

(11) **EP 4 030 317 A1**
(43) Veröffentlichungstag der Anmeldung: **20.07.2022**
(21) Anmeldenummer: 21216297.8
(22) Anmeldetag: 21.12.2021
(51) Int. Cl.: G06F 16/955

(54) **VERFAHREN ZUR INFORMATIONSÜBERTRAGUNG UND AUSGABEGERÄT ZUR DURCHFÜHRUNG DES VERFAHRENS**

(30) Priorität: 15.01.2021 DE 102021100772
(71) Anmelder: Vorreiter Technologie GmbH, 90441 Nürnberg (DE)
(72) Erfinder: Walowski, Marcelina, 90431 Nürnberg (DE); Walowski, Patrick, 90431 Nürnberg (DE)
(74) Vertreter: Stippl Patentanwälte

(57) **Zusammenfassung**

Verfahren zur papierlosen Bereitstellung einer ersten nutzerbezogenen individuellen Information von einer digitalen Datenverarbeitungseinrichtung umf auf ein mobiles Endgerät eines Nutzers, wobei die Zurverfügungstellung über einen vorzugsweise netzwerkexternen Datenserver (200), insbesondere Cloudserver, und ein Ausgabegerät (100) erfolgt, umfassend: Bereitstellen der ersten nutzerbezogenen individuellen Information in einem fest vorgegebenen digitalen Datenformat für eine Übertragung auf das mobile Endgerät des Nutzers; wobei auf einen Ausführungsbefehl an der digitalen Datenverarbeitungseinrichtung Folgendes ausgelöst wird: Übertragen der ersten nutzerbezogenen individuellen Information von der Datenverarbeitungseinrichtung an den Datenserver; Speichern der ersten nutzerbezogenen individuellen Information im Datenserver; Bereitstellen eines individuellen optischen und/oder per Nahbereichsfunkschnittstelle auslesbaren Codes im Datenserver; Zuordnen des individuellen Codes zu der im Datenserver gespeicherten ersten nutzerbezogenen individuellen Information; Übertragen bzw. Zurverfügungstellung des zugeordneten individuellen Codes von Datenserver an das bzw. dem Ausgabegerät; und Ausgabe des zugeordneten individuellen Codes an einem Display zum Einscannen und/oder an einem NFC-Modul des Ausgabegeräts zum Übertragen.

## Beschreibung

Die vorliegende Erfindung betrifft zum einen ein Verfahren zur papierlosen Zurverfügungstellung einer ersten Information eines Dienstleisters auf ein mobiles Endgerät eines Nutzers. Die Erfindung betrifft des Weiteren ein Ausgabegerät zur Durchführung des Verfahrens.

### Technologischer Hintergrund

Der Informationsaustausch zwischen einem Dienstleister und einem Nutzer, welcher eine Dienstleistung des Dienstleisters in Anspruch nimmt, findet zunehmend digital, üblicherweise per E-Mail, statt. Allerdings gibt es auch Fälle, in denen der Informationsaustausch über E-Mail nicht gewünscht ist. Dies ist insbesondere dann der Fall, wenn beispielsweise vertrauliche Informationen, insbesondere Befunddaten oder Laborberichte, von einem Arzt an einen Patienten weitergegeben werden. In solchen Fällen findet der Informationsaustausch mittels Papier statt.

Üblicherweise liegen solche Informationen beim Dienstleister allerdings in digitaler Form vor. Zum Informationsaustausch druckt der Dienstleister die entsprechende digitale Information aus und übergibt diese dem Nutzer in Papierform. Der Nutzer hat die Information somit nicht digital vorliegen und muss diese umständlich digitalisieren. Dieser Informationsaustausch ist umständlich, zeitaufwendig und verursacht einen unnötigen Papierverbrauch.

Des Weiteren gibt es Möglichkeiten solche Informationen digital auszutauschen, ohne ein E-Mail-Programm zu verwenden. Hierfür kann der Dienstleister beispielsweise die Information händisch auf einen Server hochladen oder an einen Server übertragen. Die Information wird dadurch auf dem Server unter einer spezifischen Speicheradresse gespeichert. Auf Aufforderung durch den Dienstleister kann der Server einen Hyperlink erstellen, welcher auf die Speicheradresse der Information verweist. Alternativ kann der Server einen QR-Code erstellen. Ein QR-Code ist ein zweidimensionaler maschinenlesbarer Code, welcher kodierte Daten binär darstellt. Der erstellte QR-Code kann als Zeichenkette die Speicheradresse der Information enthalten und somit auf die Speicheradresse der Information auf dem Server verweisen. Der Hyperlink und der QR-Code werden dem Dienstleister vom Server zur Verfügung gestellt. Der Hyperlink oder der QR-Code müssen nun dem Nutzer zugänglich gemacht werden. Üblicherweise schickt der Dienstleister dem Nutzer eine E-Mail mit dem entsprechenden Hyperlink oder er überträgt den QR-Code händisch an einen Bildschirm, von dem aus der Nutzer den QR-Code einscannen kann. Der Dienstleister muss demnach eine Vielzahl von verschiedenen Schritten durchführen. Deswegen ist dieser digitale Informationsaustausch für den Dienstleister sehr aufwendig ist.

Der Nutzer muss in beiden Fällen die digitale Information händisch aufrufen und herunterladen. Nach dem Herunterladen bleibt die Information auf dem Server gespeichert. Auch bei dem digitalen Informationsaustausch muss sowohl der Dienstleister als auch der Nutzer eine Vielzahl von Schritten durchführen. Dies ist ebenfalls sehr zeitaufwendig und umständlich.

### Druckschriftlicher Stand der Technik

Die US 2016/0224680 A1 offenbart ein Verfahren, um ein gedrucktes Dokument auf einem Mobilgerät zur Verfügung zu stellen. Hierfür wird das gedruckte Dokument an einem Drucker oder Kopierer eingescannt und das so digitalisierte Dokument wird an einen Remotecomputer übertragen. Der Drucker oder Kopierer erhält von dem Remotecomputer als Antwort auf die Übertragung eine Internetadresse und einen eindeutigen Identifikator, welche dem digitalisierten Dokument entsprechen. Basierend auf der Internetadresse und dem eindeutigen Identifikator wird an einer Nutzerschnittstelle des Druckers oder des Kopierers ein QR-Code angezeigt. Der QR-Code wird mit einem Mobilgerät erfasst. Anschließend ruft ein Browser des Mobilgerätes die im QR-Code gespeicherte Internetadresse auf und das digitalisierte Dokument wird auf das Mobilgerät übertragen. Der QR-Code kann an weitere Nutzer weitergeleitet werden und das digitalisierte Dokument kann auf Mobilgeräte mehrerer Nutzer übertragen werden

### Aufgabe der vorliegenden Erfindung

Eine Aufgabe der vorliegenden Erfindung ist es, ein Verfahren zur papierlosen Zurverfügungstellung einer Information eines Dienstleisters auf ein mobiles Endgerät eines Nutzers zu Verfügung zu stellen, welches es ermöglicht, in einfacher und zeitsparender Weise Informationen digital von einem Dienstleister an einen Nutzer zu übertragen. Ferner ist eine Aufgabe der vorliegenden Erfindung, ein Ausgabegerät zur Verfügung zu stellen, mit welchem das Verfahren zur papierlosen Zurverfügungstellung einer Information eines Dienstleisters auf ein mobiles Endgerät eines Nutzers in einfacher Weise durchgeführt werden kann.

### Lösung der Aufgabe

Die vorstehende Aufgabe wird durch ein Verfahren mit den Merkmalen des Anspruchs 1 sowie durch ein Ausgabegerät gemäß Anspruch 21 gelöst. Zweckmäßige Ausgestaltungen des erfindungsgemäßen Verfahrens und Ausgabegeräts werden in den Unteransprüchen beansprucht.

Erfindungsgemäß ist ein Verfahren zur papierlosen Bereitstellung einer ersten nutzerbezogenen individuellen Information von einer digitalen Datenverarbeitungseinrichtung auf ein mobiles Endgerät, vorzugsweise ein Smartphone oder ein Tablet eines Nutzers vorgesehen, wobei die Bereitstellung über einen vorzugsweise netzwerkexternen Datenserver, vorzugsweise einem Cloud-Server, welcher sich beispielsweise innerhalb eines Rechenzentrums befindet, und ein Ausgabegrät erfolgt, wobei folgende Verfahrensschritte durchgeführt werden:
Bereitstellen der ersten nutzerbezogenen individuellen Information in einem fest vorgegebenen digitalen Datenformat, vorzugsweise einer Datei im PDF-Format oder einer Bilddatei, für eine Übertragung auf das mobile Endgerät des Nutzers;
wobei auf einen Ausführungsbefehl, z. B. des Dienstleisters, an der digitalen Datenverarbeitungseinrichtung Folgendes, vorzugsweise automatisch, ausgelöst wird:
   Übertragen bzw. Hochladen der ersten nutzerbezogenen individuellen Information von der Datenverarbeitungseinrichtung des Dienstleisters an den Datenserver;
   Speichern der ersten nutzerbezogenen individuellen Information im Datenserver;
   Bereitstellen eines individuellen optischen und/oder per Nahbereichsfunkschnittstelle auslesbaren, vorzugsweise maschinenlesbaren Codes im Datenserver;
   Zuordnen des individuellen Codes zu der im Datenserver gespeicherten, ersten nutzerbezogenen individuellen Information;
   Übertragen bzw. Zurverfügungstellung des zugeordneten individuellen Codes von dem Datenserver an das bzw. an dem Ausgabegerät.
   Ausgabe des zugeordneten individuellen Codes an einem Display zum Einscannen und/oder an einem NFC-Modul des Ausgabegeräts zum Übertragen.

Der Dienstleister, z. B. ein Arzt, stellt auf Wunsch des Nutzers, z. B. eines Patienten, die erste nutzerbezogene individuelle Information, z. B. einen Laborbefund, welche beispielsweise in der Datenverarbeitungseinrichtung oder innerhalb eines lokalen Netzwerks des Dienstleisters gespeichert ist, in dem fest vorgegebenen digitalen Datenformat bereit. Falls die erste nutzerbezogene individuelle Information nicht in dem fest vorgegebenen digitalen Datenformat vorliegt, kann sie von einer Recheneinheit der Datenverarbeitungseinrichtung in das fest vorgegebene digitale Datenformat konvertiert werden. Auf Ausführungsbefehl des Dienstleisters wird die erste Information, vorzugsweise über das Internet, z. B. über VPN, an den Datenserver, welcher über eine Speicherfunktion verfügt, übertragen. Der Datenserver speichert die erste Information und ordnet diese dem bereitgestellten, vorzugsweise einzigartigen, individuellen, optischen und/oder per Nahbereichsfunkschnittstelle auslesbaren Code zu. Vorteilhafterweise wird der individuelle Code speziell für die erste Information, beispielsweise basierend auf einer Zufallszeichenfolge, generiert. Der zugeordnete individuelle Code wird vom Datenserver, vorzugsweise über das Internet, z. B. über VPN, an das Ausgabegerät übertragen und an dem Display des Ausgabegerätes und/oder an dem NFC-Modul des Ausgabegerätes ausgegeben. Die vorgenannten Verfahrensschritte laufen vorzugsweise automatisch auf ein Auslösen des Ausführungsbefehls hin ab. Somit kann das Verfahren in besonders einfacher Weise durch den Dienstleister (z. B. eine Praxismitarbeiterin) gestartet werden. Hierbei wird eine anwenderfreundliche Nutzung ermöglicht.

Somit ermöglicht die Erfindung eine sowohl für den Nutzer als auch für den Dienstleister ganz besonders effektive und einfache papierlosen Bereitstellung der ersten nutzerbezogenen individuellen Information vom Dienstleister an den Nutzer, welcher eine Dienstleistung des Dienstleisters in Anspruch nimmt. Hierdurch wird eine langfristige und sehr hohe Akzeptanz des Verfahrens bei Nutzer und Dienstleister geschaffen.

Vorteilhaferweise wird durch das Einscannen des zugeordneten individuellen Codes durch das mobile Endgerät des Nutzers am Display des Ausgabegeräts oder das Übertragen des zugeordneten individuellen Codes mittels NFC (Near Field Communication) -Technik vom NFC-Modul des Ausgabegeräts auf das mobile Endgerät des Nutzers Folgendes, vorzugsweise automatisch, ausgelöst:
Übertragen bzw. Hochladen einer auf den zugeordneten individuellen Code bezogenen Anfrage vom mobilen Endgerät des Nutzers an den Datenserver;
Aufruf der dem individuellen Code zugeordneten, im Datenserver gespeicherten, ersten nutzerbezogenen individuellen Information;
Zurverfügungstellung bzw. Übertragen der aufgerufenen, dem individuellen Code zugeordneten, im Datenserver gespeicherten ersten nutzerbezogenen individuellen Information am mobilen Endgerät bzw. an das mobile Endgerät des Nutzers.

Vorteilhafterweise wird der zugeordnete individuelle Code mit dem mobilen Endgerät des Nutzers, welches sich im Normalfall nicht in dem lokalen Netzwerk des Dienstleisters befindet, eingescannt oder mittels NFC-Technik auf das mobile Endgerät des Nutzers übertragen. Diese Übertragung allein kann bewirken, dass der zugeordnete individuelle Code selbsttätig vom mobilen Endgerät des Nutzers an den Datenserver übertragen wird. Vorzugsweise findet die Übertragung vom mobilen Endgerät des Nutzers an den Datenserver über das Internet (vorzugsweise über eine Mobilfunkzelle oder über eine Nahbereichsfunkschnittstelle) statt. Die Übertragung des zugeordneten individuellen Codes bewirkt ebenfalls, dass die dem individuellen Code zugeordnete erste nutzerbezogene individuelle Information aufgerufen und am mobilen Endgerät des Nutzers zur Verfügung gestellt wird. Somit kann durch das Verfahren eine automatische Zurverfügungstellung der ersten Information in einem fest vorgegebenen digitalen Datenformat auf dem mobilen Endgerät des Nutzers ermöglicht werden. Durch dieses Verfahren kann der Informationsaustausch in besonders nutzerfreundlicher (Dienstleister sowie Nutzer) Weise ermöglicht werden.

Vorzugsweise wird die zur Verfügung gestellte, dem individuellen Code zugeordnete, im Datenserver gespeicherte erste nutzerbezogene individuelle Information auf das mobile Endgerät des Nutzers heruntergeladen. Dadurch wird die erste Information dauerhaft auf dem mobilen Endgerät, vorzugsweise auf einem nichtflüchtigen Speicher des mobilen Endgerätes, gespeichert. Dadurch kann der Nutzer auf die erste nutzerbezogene individuelle Information zugreifen, auch wenn diese auf dem Datenserver gelöscht wurde.

Vorteilhafterweise kann die Übertragung der ersten nutzerbezogenen individuellen Information von der digitalen Datenverarbeitungseinrichtung an den Datenserver über das Ausgabegerät erfolgen. Hierdurch werden die dienstleisterseitigen Verfahrensschritte über das Ausgabegerät geleitet bzw. gesteuert. Das Verfahren kann somit automatisch gestartet werden, indem der Dienstleister die erste Information an das Ausgabegerät überträgt bzw. dem digitalen Ausgabegerät zur Verfügung stellt. Vorzugsweise kann das Ausgabegerät die erste Information in das fest vorgegebene digitale Datenformat konvertieren.

Dadurch, dass die erste nutzerbezogene individuelle Information nach der Zurverfügungstellung oder dem Herunterladen der ersten nutzerbezogenen individuellen Information im Datenserver durch den Verfahrensablauf selbsttätig gelöscht wird, wird die erste Information ohne aktives Handeln bzw. Eingreifen des Nutzers oder Dienstleisters gelöscht. Dadurch wird eine hohe Datensicherheit gewährleistet, da die erste Information nicht auf dem Server gespeichert bleibt und somit vor dem Zugriff Dritter geschützt wird. Die Löschung der ersten Information wird vorteilhafterweise durch die Zurverfügungstellung oder durch das, vorzugsweise vollständige, Herunterladen der ersten nutzerbezogenen individuellen Information selbsttätig veranlasst.

Vorteilhafterweise kann der zugeordnete individuelle Code auf dem Datenserver ausschließlich der gespeicherten, ersten nutzerbezogenen individuellen Information in dem fest vorgegebenen digitalen Datenformat zugeordnet sein. Somit ist hier eine unmittelbare Verknüpfung zwischen dem zugeordneten individuellen Code und der betreffenden Datei vorgesehen. Sofern daher ein Informationsaustausch stattgefunden hat, kann mit der Löschung der Datei gleichzeitig auch der zugeordnete individuelle Code gelöscht werden.

Vorteilhafterweise ändert bzw. generiert der Datenserver den individuellen Code fortwährend. Dadurch werden fortlaufend bzw. kontinuierlich, beispielsweise zufällige oder pseudozufällige, individuelle Codes generiert, wodurch die Datensicherheit erhöht wird. Vorzugsweise ordnet der Datenserver den aktuellen individuellen Code der auf dem Datenserver gespeicherten, ersten nutzerbezogenen individuellen Information zu. Der individuelle Code kann in vorzugsweise regelmäßigen Zeitabschnitten geändert bzw. neu generiert werden, z. B alle zehn Sekunden oder alle fünf Sekunden oder jede Sekunde.

Dadurch, dass der zugeordnete individuelle Code nach der Zurverfügungstellung oder dem Herunterladen der ersten nutzerbezogenen individuellen Information nicht mehr der ersten nutzerbezogenen individuellen Information zugeordnet ist (z. B. dem Laborbericht) und für eine andere nutzerbezogene individuelle Information eines anderen Nutzers (z. B. ein Untersuchungsergebnis eines anderen Patienten) oder desselben Nutzers (z. B. ein Rezept für den vorhergehenden Patienten) bereitgehalten werden kann, wird der zugeordnete individuelle Code nach einer Verwendung nicht verworfen, sondern der individuelle Code kann erneut bzw. mehrfach verwendet werden. Dies ermöglicht es, das Verfahren mit einer begrenzten Anzahl an Codes durchzuführen, wodurch der erforderliche Rechenaufwand reduziert wird.

Vorzugsweise ist der zugeordnete individuelle Code nur einmal gültig. Dadurch kann der zugeordnete individuelle Code nur einmal verwendet werden, sodass dieser keiner anderen nutzerbezogenen individuellen Information eines anderen Nutzers oder desselben Nutzers zugeordnet werden kann. Dadurch wird ein Aufruf einer anderen nutzerbezogenen individuellen Information mit Hilfe des zugeordneten individuellen Codes verhindert und hierdurch die Datensicherheit noch weiter erhöht. Vorteilhafterweise vergleicht der Datenserver die neu generierten individuellen Codes mit bereits zugeordneten individuellen Codes. Dadurch kann sichergestellt werden, dass der neu generierte Code bisher nicht verwendet wurde.

Indem das Herunterladen der ersten nutzerbezogenen individuellen Information auf das mobile Endgerät durch das Einscannen oder das Übertragen mittels NFC-Technik des zugeordneten individuellen Codes initialisiert wird, findet das Herunterladen der ersten Information automatisch statt. Somit wird die erste Information selbstständig bzw. automatisch auf dem mobilen Endgerät des Nutzers gespeichert, sodass der Nutzer für das Herunterladen bzw. Speichern der ersten Information nicht mehr aktiv handeln muss. Hierdurch wird die Handhabbarkeit durch den Nutzer ganz erheblich erleichtert und eine sehr hohe Akzeptanz des Verfahrens bei dem Nutzer geschaffen.

Vorzugsweise handelt es sich bei dem individuellen Code um einen QR-Code oder einen Barcode.

Vorzugsweise wird durch das Einscannen oder das Übertragen mittels NFC-Technik des zugeordneten individuellen Codes eine digitale Information, vorzugsweise im Datenserver erzeugt, die eine Verknüpfung des Dienstleisters mit dem Nutzer beinhaltet. Diese Information kann im Datenserver gespeichert und/oder ausgelesen werden. Dadurch können Nutzer und Dienstleister gegenseitig zugeordnet werden, wodurch eine Kommunikation der beiden über den Datenserver möglich wird.

Vorteilhafterweise wird auf Basis der Verknüpfung eine Informationsaustauschstruktur, z. B. ein Kalendersystem und/oder ein Dokumentenaustauschsystem, zwischen dem Dienstleister und dem Nutzer betrieben.

Vorteilhafterweise können auf Basis der Verknüpfung folgende Verfahrensschritte durchgeführt werden:
Einwählen des Nutzers mit dem mobilen Endgerät in den Datenserver;
Erstellen einer nutzerbezogenen individuellen Anfrage des Nutzers an den Dienstleister, beispielsweise auf dem Datenserver oder dem mobilen Endgerät;
wobei durch das Erstellen der nutzerbezogenen individuellen Anfrage des Nutzers eine Zurverfügungstellung der nutzerbezogenen individuellen Anfrage des Nutzers an einer Nutzerschnittstelle der Datenverarbeitungseinrichtung des Dienstleisters, vorzugsweise automatisch, ausgelöst wird;
Bereitstellen einer zweiten nutzerbezogenen individuellen Information des Dienstleisters als Antwort auf die nutzerbezogene individuelle Anfrage des Nutzers;
wobei durch das Bereitstellen der nutzerbezogenen individuellen Anfrage Folgendes, vorzugsweise automatisch, ausgelöst wird:
   Übertragen der zweiten nutzerbezogenen individuellen Information von der Datenverarbeitungseinrichtung, vorzugsweise über das Ausgabegerät, an den Datenserver;
   Zurverfügungstellung der zweiten nutzerbezogenen individuellen Information am mobilen Endgerät des Nutzers.

Aufgrund der Verknüpfung kann der Nutzer auch nach einer Zurverfügungstellung oder einem vorzugsweise erfolgreichen Herunterladen der ersten nutzerbezogenen individuellen Information mit dem Dienstleister kommunizieren. Beispielsweise kann sich der Nutzer hierfür mit seinem mobilen Endgerät auf dem Datenserver einwählen und dort, vorzugsweise über ein Menü, eine nutzerbezogene individuelle Anfrage erstellen. Vorteilhafterweise ist für das Einwählen auf dem Datenserver eine zusätzliche Sicherheitsprüfung, beispielsweise eine Fingerabdruckerkennung oder eine Gesichtserkennung durch das mobile Endgerät, nötig. Basierend auf der nutzerbezogenen individuellen Anfrage kann der Nutzer eine zweite nutzerbezogene individuelle Information als Antwort auf die nutzerbezogene individuelle Anfrage anfordern. Infolgedessen kann der Nutzer beispielsweise weitere Dokumente anfordern oder Termine mit dem Dienstleister vereinbaren. Durch die Zurverfügungstellung der nutzerbezogenen individuellen Anfrage des Nutzers an der Nutzerschnittstelle der Datenverarbeitungseinrichtung des Dienstleisters kann der Dienstleister über eine neue nutzerbezogene individuelle Anfrage des Nutzers informiert werden. Diese kann der Dienstleister beispielsweise auf dem Datenserver oder an der Nutzerschnittstelle der Datenverarbeitungseinrichtung einsehen. Vorzugsweise wird die nutzerbezogene individuelle Anfrage des Nutzers vom Datenserver an die Datenverarbeitungseinrichtung des Dienstleisters übertragen bzw. von dieser heruntergeladen. Diese Übertragung kann beispielsweise über das Ausgabegerät erfolgen. Hierdurch können in besonders einfacher Weise Informationen zwischen dem Nutzer und dem Dienstleister ausgetauscht werden. Die zweite nutzerbezogene individuelle Information kann hierbei der ersten nutzerbezogenen individuellen Information entsprechen, wenn Letztere dem Nutzer beispielsweise nicht mehr vorliegt.

Dadurch, dass die zur Verfügung gestellte zweite nutzerbezogene individuelle Information auf das mobile Endgerät heruntergeladen bzw. auf dem mobilen Endgerät gespeichert werden kann, kann die zweite Information dauerhaft auf einem Speicher des mobilen Endgerätes gesichert werden. Infolgedessen steht die zweite nutzerbezogene individuelle Information auch nach einer Löschung derselben vom Datenserver zur Verfügung.

Vorteilhafterweise wird die von der Datenverarbeitungseinrichtung an den Datenserver übertragene zweite nutzerbezogene individuelle Information im Datenserver gespeichert. Vorzugsweise bleibt die zweite nutzerbezogene individuelle Information so lange im Datenserver gespeichert, bis diese vorzugsweise vollständig auf das mobile Endgerät heruntergeladen bzw. auf dem mobilen Endgerät zur Verfügung gestellt wurde. Dadurch kann sichergestellt werden, dass die zweite Information am mobilen Endgerät des Nutzers ankommt, auch wenn das mobile Endgerät kurzfristig nicht erreichbar ist, z. B. aufgrund eines Funklochs oder weil es ausgeschaltet ist. Hierbei kann der Datenserver in vorzugsweise regelmäßigen Zeitabständen versuchen, die zweite Information an das mobile Endgerät des Nutzers zu übermitteln.

Dadurch, dass keine Information und/oder Anfrage auf dem Ausgabegerät gespeichert wird, dient das Ausgabegerät ausschließlich der Weiterleitung der ersten und/oder zweiten nutzerbezogenen individuellen Information und/oder der nutzerbezogenen individuellen Anfrage. Des Weiteren wird kein großer Speicher zur Speicherung der ersten und/oder zweiten nutzerbezogenen individuellen Information und/oder der nutzerbezogenen individuellen Anfrage innerhalb des Ausgabegerätes benötigt. Infolgedessen wird die Datensicherheit des Verfahrens deutlich erhöht.

Indem die Speicherung der ersten und/oder zweiten nutzerbezogenen individuellen Information auf dem Datenserver zeitlimitiert ist, wird die jeweilige Information nach Ablauf der Zeit automatisch vom Datenserver gelöscht, z. B. wenn diese nicht aufgerufen oder zur Verfügung gestellt oder, vorzugsweise vollständig, heruntergeladen wurde. Dies erhöht die Datensicherheit deutlich. Besonders vorteilhaft ist es, wenn die jeweilige Information maximal eine Woche, vorzugsweise maximal drei Tage, besonders vorzugsweise maximal einen Tag, auf dem Datenserver gespeichert wird.

Vorzugsweise wird die Kommunikation zwischen der Datenverarbeitungseinrichtung und/oder dem Ausgabegerät und/oder dem Datenserver und/oder dem mobilen Endgerät zumindest teilweise verschlüsselt, beispielsweise mit einer SSL bzw. einer TSL 1.3 Verschlüsselung, durchgeführt. Vorteilhafterweise wird die auf dem Datenserver gespeicherte Information, beispielsweise mit einer Rijndael oder einer Triple-DES Verschlüsselung, insbesondere mit einem 4096 Bit Schlüssel, verschlüsselt. Dies erhöht die Datensicherheit, da die jeweilige Information und/oder Anfrage nicht abgehört und/oder ausgelesen werden können. Somit wird ein sicherer Informationsaustausch gewährleistet.

Vorteilhafterweise befinden sich das Ausgabegerät und die Datenverarbeitungseinrichtung innerhalb eines vorzugsweise lokalen Netzwerks, vorzugsweise eines Client-Server-Netzwerks. Hierdurch können das Ausgabegerät und die Datenverarbeitungseinrichtung in besonders einfacher Weise direkt miteinander kommunizieren.

Vorteilhafterweise initialisiert sich das Ausgabegerät selbstständig, beispielsweise nach dem Einschalten und/oder dem Verbinden mit einem Netzwerk und/oder dem Internet (z. B. durch eine Praxismitarbeiterin), sodass das Verfahren unmittelbar nach dem Einschalten und/oder Verbinden betriebsbereit ist. Somit führt das Ausgabegerät nach dem Verbinden mit dem Client-Server-Netzwerk alle notwendigen Konfigurations- und/oder Installationsschritte selbstständig bzw. automatisch durch, um das Verfahren einzurichten. Es handelt sich hierbei vorzugsweise um eine sogenannte Plug and Play-Funktionalität. Daraus resultiert eine besondere Bedienungsfreundlichkeit und Akzeptanz des Ausgabegerätes in Bezug auf dienstleisterseitige Nutzer.

Die vorliegende Erfindung betrifft des Weiteren ein Ausgabegerät gemäß dem Oberbegriff des Anspruchs 15, welches dadurch gekennzeichnet ist, dass Letzteres zur Durchführung des Verfahrens nach einem der vorhergehenden Ansprüche hergerichtet ist. Das Ausgabegerät ist über eine Netzwerkschnittstelle, beispielsweise einen Transceiver, drahtlos oder kabelgebunden mit einem lokalen Netzwerk oder mit dem Internet verbunden. Das Ausgabegerät gibt den der im Datenserver gespeicherten, ersten nutzerbezogenen individuellen Information zugeordneten individuellen Code auf seinem Display bzw. an seinem NFC-Modul aus. Infolgedessen kann das Ausgabegerät besonders einfach genutzt werden, da der Nutzer lediglich den individuellen Code am Display mit dem mobilen Endgerät einscannen muss oder das mobile Endgerät nahe an das NFC-Modul des Ausgabegerätes halten muss, um eine NFC-Übertragung des individuellen Codes zu starten. Bevorzugt ist, dass der Dienstleister die erste bzw. die zweite nutzerbezogene individuelle Information lediglich an das Ausgabegerät überträgt und das Verfahren daraufhin vom Ausgabegerät automatisch gestartet wird. Die Recheneinheit des Ausgabegerätes kann vorzugsweise eine Datenkonvertierung und/oder eine Verschlüsselung der zu übertragenden ersten bzw. zweiten Information durchführen. Infolgedessen kann die erste bzw. die zweite Information durch das Ausgabegerät in das fest vorgegebene digitale Datenformat konvertiert und im Anschluss daran verschlüsselt werden. Besonders bevorzugt ist es, wenn das Ausgabegerät mit einem lokalen Netzwerk verbunden werden kann und dieses nach dem Verbinden desselben mit dem Netzwerk selbstständig das Verfahren zur papierlosen Zurverfügungstellung einer Information eines Dienstleisters auf ein mobiles Endgerät eines Nutzers initialisiert. Vorzugsweise handelt es sich bei dem Display des Ausgabegerätes um ein berührungssensitives Display.

Dadurch, dass das Ausgabegerät eine Rechnereinheit, vorzugsweise eine Client-Rechnereinheit, innerhalb des Netzwerks, vorzugsweise des Client-Server-Netzwerks, ist, kann es besonders einfach in das Netzwerk integriert werden. Vorteilhafterweise ist das Ausgabegerät zudem nach Art eines Druckers in das Netzwerk integriert. Infolgedessen kann das Ausgabegerät besonders einfach durch den Dienstleister bedient und angesteuert werden.

Das Ausgabegerät umfasst vorzugsweise keine herkömmliche Druckfunktion und/oder Scanfunktion und/oder Faxfunktion. Es kann deshalb lediglich geringe Abmessungen aufweisen und ist daher ganz besonders als Tisch- oder Thekengerät geeignet. Beispielsweise kann es für einen Arztbesucher gut zugänglich auf einer Empfangstheke einer Arztpraxis positioniert werden. Auch für Apotheken sowie anderweitige Dienstleister eignet sich ein derartig konzeptioniertes Ausgabegerät ganz besonders.

Vorzugsweise kann das Ausgabegerät nach Art eines Netzwerkdruckers in das Netzwerk integriert sein. Hierdurch kann die erste nutzerbezogene individuelle Information per Druckbefehl an der digitalen Datenverarbeitungseinrichtung von dieser an das Ausgabegerät übertragen werden. Das Ausgabegerät ist hierbei als eigenständiges Gerät in das Netzwerk integriert. Auf der Datenverarbeitungseinrichtung kann vorzugsweise ein passender Treiber installiert sein, welcher der Datenverarbeitungseinrichtung die Kommunikation mit dem Ausgabegerät ermöglicht.

Gemäß einer weiteren Ausgestaltung sendet die digitale Datenverarbeitungseinrichtung die erste nutzerbezogene individuelle Information im PostScript (PS)-Format oder im Printer Command Language (PCL)-Format oder im XML Paper Specification (XPS)-Format oder im Windows Enhanced Metafile (EMF)-Format an das Ausgabegerät. Die erste Information kann durch das Ausgabegerät vom PS-Format oder PCL-Format oder XPS-Format oder EMF-Format in das für die Ausgabe fest vorgegebene digitale Datenformat, z. B. in das PDF-Format, konvertiert werden.

Weiterhin kann das Ausgabegerät als standardisiertes Ausgabegerät, welches für die Anbindung an verschiedene Datenformate geeignet ist, konzipiert werden. Das Ausgabegerät ist somit nicht auf eine einzige konkrete Datenschnittstellen-Anforderung begrenzt. Der Dienstleister, z. B. der Arzt, muss keine zusätzliche Software zur Bedienung des Ausgabegerätes verwenden, sondern kann die erste Information per Druckbefehl direkt aus einem Datenverwaltungsprogramm, z. B. einem Patientenverwaltungsprogramm, an das Ausgabegerät weitergeben.

### Beschreibung der Erfindung anhand von Ausführungsbeispielen

Zweckmäßige Ausgestaltungen des erfindungsgemäßen Verfahrens sowie des Ausgabegerätes werden anhand von Zeichnungsfiguren nachstehend näher erläutert. Wiederkehrende Merkmale sind der Übersichtlichkeit halber lediglich mit einem Bezugszeichen versehen. Es zeigen:
- Fig. 1a: eine stark vereinfachte schematische Gesamtdarstellung eines Client-Server-Netzwerks mit einem Beispiel eines erfindungsgemäßen Ausgabegerätes, eines Datenservers und eines mobilen Endgerätes, welche jeweils mit dem Internet verbunden sind, gemäß einem ersten Ausführungsbeispiel;
- Fig. 1b: eine stark vereinfachte schematische Gesamtdarstellung eines Beispiels eines erfindungsgemäßen Ausgabegerätes, eines Datenservers und eines mobilen Endgerätes, welche jeweils mit dem Internet verbunden sind, gemäß einem zweiten Ausführungsbeispiel;
- Fig. 2a: eine stark vereinfachte beispielhafte Anordnung gemäß dem ersten Ausführungsbeispiel nach Fig. 1a zur papierlosen Zurverfügungstellung einer ersten Information eines Dienstleisters auf ein mobiles Endgerät eines Nutzers sowie die daran beteiligten Funktionseinheiten;
- Fig. 2b: eine stark vereinfachte beispielhafte Anordnung gemäß dem zweiten Ausführungsbeispiel nach Fig. 1b zur papierlosen Zurverfügungstellung einer ersten Information eines Dienstleisters auf ein mobiles Endgerät eines Nutzers sowie die daran beteiligten Funktionseinheiten;
- Fig. 2c: ein Beispiel eines Ablaufdiagramms des Verfahrens zur papierlosen Zurverfügungstellung einer ersten Information eines Dienstleisters auf ein mobiles Endgerät eines Nutzers;
- Fig. 3a: eine stark vereinfachte schematische Anordnung gemäß dem ersten Ausführungsbeispiel nach Fig. 1a zur papierlosen Zurverfügungstellung einer zweiten Information eines Dienstleisters als Antwort auf eine Anfrage eines Nutzers auf ein mobiles Endgerät des Nutzers sowie die daran beteiligten Funktionseinheiten;
- Fig. 3b: eine stark vereinfachte schematische Anordnung gemäß dem zweiten Ausführungsbeispiel nach Fig. 1b zur papierlosen Zurverfügungstellung einer zweiten Information eines Dienstleisters als Antwort auf eine Anfrage eines Nutzers auf ein mobiles Endgerät des Nutzers sowie die daran beteiligten Funktionseinheiten;
- Fig. 3c: ein Beispiel eines Ablaufdiagramms des Verfahrens zur papierlosen Zurverfügungstellung einer zweiten Information eines Dienstleisters als Antwort auf eine Anfrage eines Nutzers auf ein mobiles Endgerät des Nutzers;
- Fig. 4a: ein Beispiel des erfindungsgemäßen Ausgabegerätes in perspektivischer Ansicht sowie
- Fig. 4b: eine beispielhafte schematische Darstellung der Funktionselemente des erfindungsgemäßen Ausgabegerätes gemäß Fig. 4a.

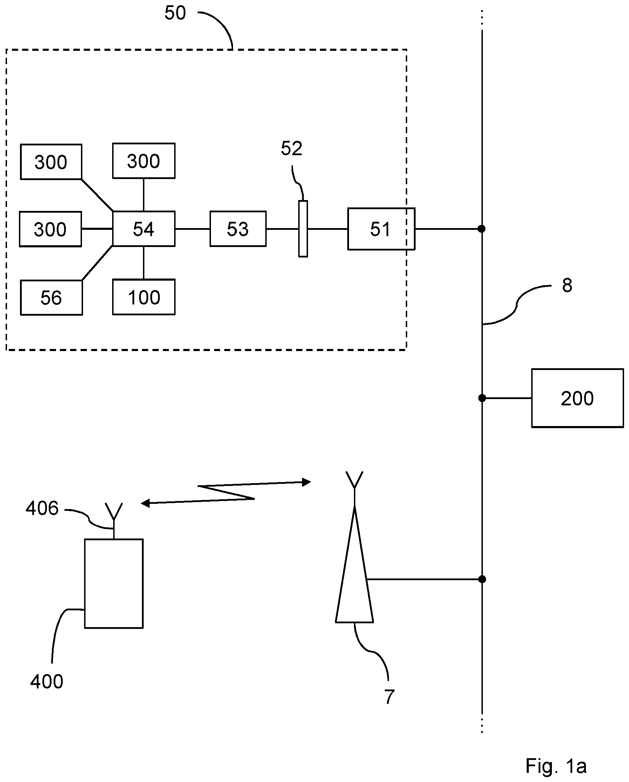

Fig. 1a zeigt eine stark vereinfachte Darstellung eines Client-Server-Netzwerks 50 eines Dienstleisters, z. B. eines Arztes, welches per Internet 8 mit einem netzwerkexternen Datenserver 200 verbunden ist, gemäß dem ersten Ausführungsbeispiel. Zudem kann ein mobiles Endgerät 400 eines Kunden des Dienstleisters (z. B. eines Patienten) über eine Mobilfunkverbindung zwischen einer Antenne 406 und einem Funkmasten 7 ebenfalls mit dem Internet 8 verbunden sein. Alternativ kann das mobile Endgerät 400 in ein mit dem Internet 8 verbundenes (nicht dargestelltes) Netzwerk integriert sein. Über das Internet 8 können das mobile Endgerät 400 und das Client-Server-Netzwerk 50 und/oder einzelne Komponenten des Client-Server Netzwerks 50, beispielsweise die Datenverarbeitungseinrichtung 200 und/oder ein erfindungsgemäßes Ausgabegerät 100, mit dem Datenserver 200 kommunizieren.

Das Client-Server-Netzwerk 50 umfasst in dem in Fig. 1a dargestellten Beispiel drei Datenverarbeitungseinrichtungen 300, z. B. PCs, einen Drucker 56 sowie ein erfindungsgemäßes Ausgabegerät 100. Es ist allerdings auch eine andere Anzahl an Datenverarbeitungseinrichtungen 300 innerhalb des Client-Server-Netzwerks 50 möglich. Die Datenverarbeitungseinrichtungen 300, der Drucker 56 und das Ausgabegerät 100 können über einen Switch 54 mit einem Server 53 verbunden sein. Der Switch 54 dient als Verteiler bzw. Netzwerkweiche, um Daten zwischen den einzelnen Komponenten des Client-Server-Netzwerks 50 auszutauschen oder zu verteilen. Auf dem Server 53 können verschiedene Informationen und/oder Programme gespeichert sein, welche von einem Dienstleister über die Datenverarbeitungseinrichtung 300 aufgerufen werden können. Der Server 53 ist über eine Firewall 52 zum Schutz vor einem unerwünschten Netzwerkzugriff und über einen Router 51 an das Internet 8 angeschlossen. Der Router 51 stellt eine Verbindung des Client-Server-Netzwerks 50 mit dem Internet 8 her.

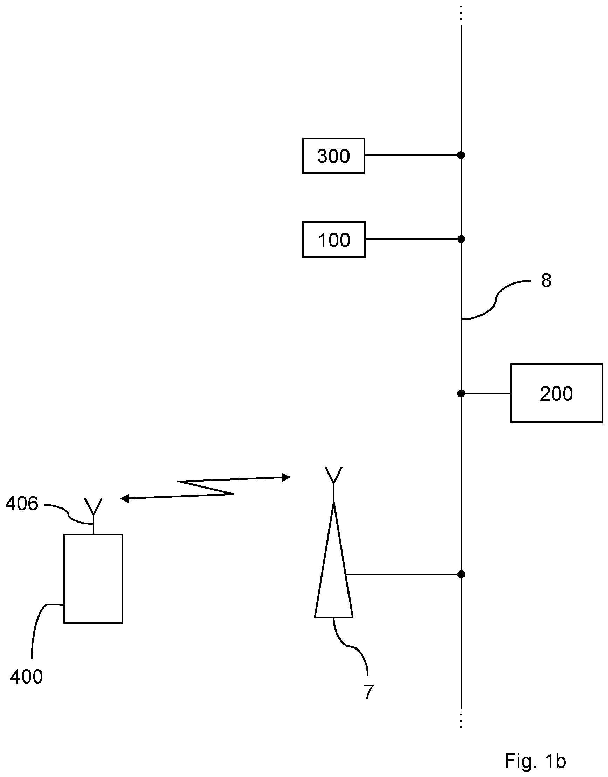

Fig. 1b zeigt eine stark vereinfachte Darstellung des erfindungsgemäßen Ausgabegerätes 100, des Datenservers 200 und des mobilen Endgerätes 400 gemäß dem zweiten Ausführungsbeispiel. Hierbei sind das Ausgabegerät 100 und die Datenverarbeitungseinrichtung 300 nicht über ein lokales Netzwerk mit einander verbunden. Vielmehr sind beide, beispielsweise über eine Nahbereichsfunkschnittstelle oder eine Mobilfunkschnittstelle oder kabelgebunden, direkt mit dem Internet 8 verbunden. Über das Internet 8 können das Ausgabegerät 100, die Datenverarbeitungseinrichtung 300, der Datenserver 200 und das mobile Endgerät 400 miteinander kommunizieren.

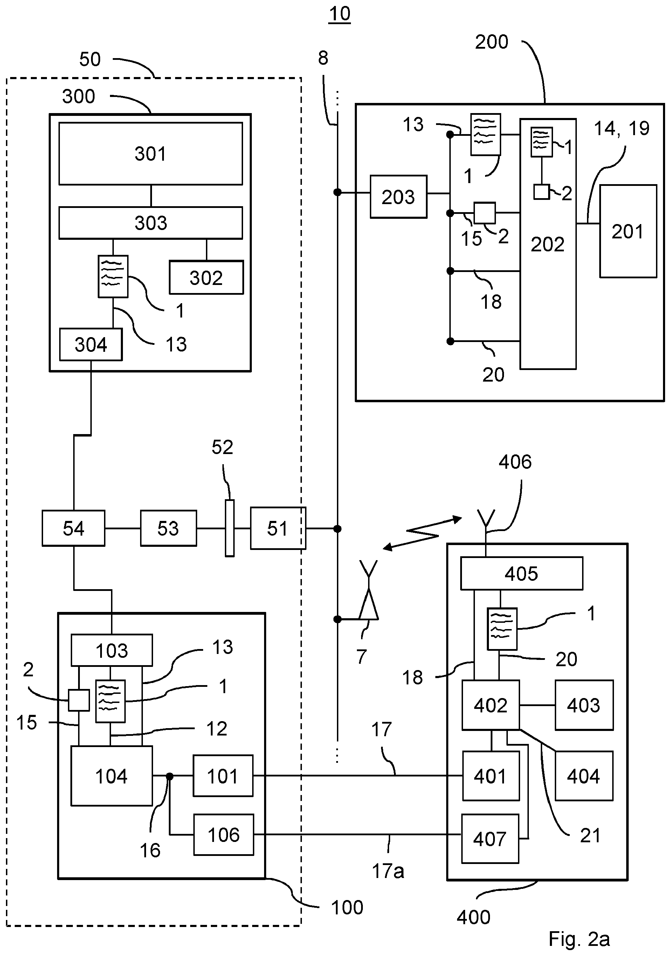

Fig. 2a zeigt eine Anordnung bzw. ein Verfahren 10 gemäß dem ersten Ausführungsbeispiel nach Fig. 1a zur papierlosen Zurverfügungstellung einer ersten nutzerbezogenen individuellen Information 1, z. B. eines Laborbefunds des Arztes, auf ein mobiles Endgerät 400 z. B. eines Patienten. Ebenfalls werden in Fig. 2a die an dem Verfahren beteiligten Funktionseinheiten dargestellt.

Die Datenverarbeitungseinrichtung 300 des Client-Server-Netzwerks 50 umfasst eine Nutzerschnittstelle 301, beispielsweise ein Display und/oder eine Tastatur, mit welcher der Dienstleister die Datenverarbeitungseinrichtung 300 bedienen kann. Ferner umfasst die Datenverarbeitungseinrichtung 300 einen Speicher 302, eine Recheneinheit 303 und eine Netzwerkschnittstelle 304. Die Netzwerkschnittstelle 304 verbindet die Datenverarbeitungseinrichtung 300 drahtlos oder kabelgebunden mit dem Switch 54 des Client-Server-Netzwerks 50. Die Datenverarbeitungseinrichtung 300 kann als Client in das Client-Server-Netzwerk 50 integriert sein. Bei der Datenverarbeitungseinrichtung 300 handelt es sich beispielsweise um einen PC des Dienstleisters.

Das erfindungsgemäße Ausgabegerät 100 des Client-Server-Netzwerks 50 umfasst ein Display 101 und/oder ein NFC-Modul 106, eine Recheneinheit 104 sowie eine Netzwerkschnittstelle 103. Das Ausgabegerät 100 ist über die Netzwerkschnittstelle 103 drahtlos oder kabelgebunden mit dem Switch 54 des Client-Server-Netzwerks 50 verbunden. Das Ausgabegerät 100 kann als Client im Client-Server-Netzwerk 50 betrieben werden.

Das Ausgabegerät 100 und die Datenverarbeitungseinrichtung 300 sind über den Switch 54, den Server 53, die Firewall 52 und den Router 51 mit dem Internet 8 verbunden.

Der Datenserver 200 umfasst einen Speicher 201, eine Recheneinheit 202 und eine Netzwerkschnittstelle 203, mit welcher der Datenserver 200 mit dem Internet 8 verbunden ist. Bei dem Datenserver 200 handelt es sich vorzugsweise um einen Datenserver oder einen sogenannten Cloud-Server.

Auch das mobile Endgerät 400 kann z. B. durch die Funkverbindung zwischen der Antenne 406 und dem Funkmasten 7 mit dem Internet 8 verbunden sein. Die Antenne 406 ist mit einer Netzwerkschnittstelle 405 des mobilen Endgerätes 400 verbunden. Ferner umfasst das mobile Endgerät 400 eine Recheneinheit 402, eine Nutzerschnittstelle 403, ein vorzugsweise berührungssensitives Display 403, einen Speicher 404 sowie eine Kamera 401 und ein NFC-Modul 407. Vorzugsweise handelt es sich bei dem mobilen Endgerät 400 um ein Smartphone oder ein Tablet.

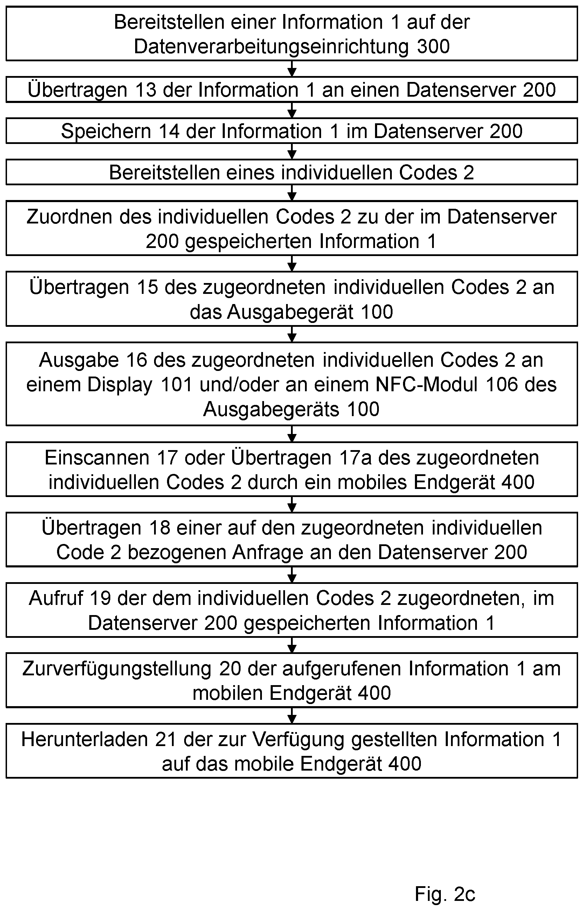

Im Folgenden wird ein Beispiel des Verfahrens 10 zur papierlosen Zurverfügungstellung der ersten nutzerbezogenen individuellen Information 1 eines Dienstleisters auf ein mobiles Endgerät 400 des Nutzers anhand der Fig. 2a und 2c beschrieben.

Beispielsweise fordert der eine Dienstleistung des Dienstleisters, z. B. eine ärztliche Untersuchung, in Anspruch nehmende Nutzer beim Dienstleister eine erste nutzerbezogene individuelle Information 1, z. B. einen Laborbefund, an. Der Nutzer befindet sich hierbei in den Räumlichkeiten des Dienstleisters, z. B. in der Arztpraxis des Arztes. Daraufhin ruft der Dienstleister die erste nutzerbezogene individuelle Information 1 über die Nutzerschnittstelle 301 der Datenverarbeitungseinrichtung 300 auf. Die Information 1 befindet sich im Client-Server-Netzwerk 50 und kann hierbei auf dem Speicher 302 der Datenverarbeitungseinrichtung 300 oder alternativ auf dem Server 53 des Client-Server-Netzwerks 50 gespeichert sein. Nach dem Aufrufen der Information 1 an der Datenverarbeitungseinrichtung 300 wird die erste Information 1 bereitgestellt. Hierzu wird die erste Information 1 in einem fest vorgegebenen digitalen Datenformat bereitgestellt bzw. von der Recheneinheit 303 der Datenverarbeitungseinrichtung 300, vorzugsweise selbsttätig, in ein fest vorgegebenes digitales Datenformat, vorzugsweise in ein Bild-Format oder in ein PDF-Format konvertiert.

Auf Ausführungsbefehl des Dienstleisters wird die erste nutzerbezogene individuelle Information 1 dann von der Datenverarbeitungseinrichtung 300 an den Datenserver 200 übertragen, siehe Schritt 13. Hierbei wird die Information 1 von der Recheneinheit 303 über die Netzwerkschnittstelle 304 und den Switch 54 an den Datenserver 200 übertragen.

Alternativ kann die erste nutzerbezogene individuelle Information 1 zuerst von der Datenverarbeitungseinrichtung 300 über den Switch 54 an das Ausgabegerät 100 übertragen werden, siehe Schritt 12. Hierbei wird die Information 1 von der Netzwerkschnittstelle 103 an die Recheneinheit 104 übermittelt. Vorzugsweise wird die erste Information 1 erst in der Recheneinheit 104 in das fest vorgegebene digitale Datenformat konvertiert. Hierdurch kann die Datenverarbeitungseinrichtung 300 des Dienstleisters entlastet werden. Die Recheneinheit 104 des Ausgabegeräts 100 überträgt direkt im Anschluss an die Übertragung 12 der ersten Information 1 bzw. deren Konvertierung die erste Information 1 über die Netzwerkschnittstelle 103 und den Switch 54 an den Datenserver 200. Indem die Übertragung 13 der ersten Information 1 über das Ausgabegerät 100 verläuft, kommuniziert vorteilhafterweise nur Letzteres mit dem Datenserver 200. Hierdurch wird es ermöglicht, dass das Verfahren 10 über das Ausgabegerät 100 gesteuert wird.

Der Datenserver 200 empfängt die von der Datenverarbeitungseinrichtung 300 übertragene erste nutzerbezogene individuelle Information 1 an seiner Netzwerkschnittstelle 203, welche diese an die Recheneinheit 202 weiterleitet. Die erste Information 1 kann von der Recheneinheit 202 auf dem Speicher 201, vorzugsweise in verschlüsselter Form, gespeichert werden, siehe Schritt 14.

Der Datenserver 200 bzw. dessen Recheneinheit 202 stellt dann einen individuellen optischen und/oder per Nahbereichsfunktechnik auslesbaren Code 2 bereit. Der individuelle Code 2 kann von der Recheneinheit 202 des Datenservers 200, vorzugsweise speziell für die erste Information 1, generiert werden. Der bereitgestellte individuelle Code 2 ist der ersten nutzerbezogenen individuellen Information 1 bzw. deren konkreter Datei unmittelbar, vorzugsweise ausschließlich, zugeordnet.

Im Anschluss daran wird der zugeordnete individuelle Code 2 selbsttätig von dem Datenserver 200 an das Ausgabegerät 100 übertragen, siehe Schritt 15, bzw. dem Ausgabegerät 100 zum insbesondere automatisierten Abruf zur Verfügung gestellt. Der zugeordnete individuelle Code 2 ist somit am Ausgabegerät 100 zugänglich.

Am Display 101 und/oder am NFC-Modul 106 des Ausgabegeräts 100 wird der zugeordnete individuelle Code 2 ausgegeben, siehe Schritt 16.

Der Nutzer kann mit der Kamera 401 seines mobilen Endgerätes 400 den am Display 101 angezeigten zugeordneten individuellen Code 2 einscannen, siehe Schritt 17. Alternativ kann der Nutzer das mobile Endgerät 400 an das NFC-Modul 106 des Ausgabegerätes 100 halten, sodass das NFC-Modul 407 des mobilen Endgerätes 400 mit dem NFC-Modul 106 des Ausgabegerätes 100 kommunizieren und der zugeordnete individuelle Code 2 an das mobile Endgerät 400 per NFC übertragen werden kann, siehe Schritt 17a.

Das mobile Endgerät 400 bzw. dessen Recheneinheit 402 überträgt eine auf den zugeordneten individuellen Code 2 basierende Anfrage über die Netzwerkschnittstelle 405, die Antenne 406 und den Funkmasten 7 über das Internet 8 an den Datenserver 200, siehe Schritt 18.

Die Recheneinheit 202 überprüft die Anfrage und die auf dem Speicher 201 gespeicherte, dem individuellen Code 2 zugeordnete erste Information 1 auf, wie dies durch Schritt 19 veranschaulicht ist.

Im Anschluss daran wird die erste nutzerbezogene individuelle Information 1 vom Datenserver 200 dem mobilen Endgerät 400 zur Verfügung gestellt, siehe Schritt 20, bzw. über das Internet 8 direkt an das mobile Endgerät 400 übertragen. Sie befindet sich dann auf dem mobilen Endgerät 400 und kann auf dem Display 403 des mobilen Endgerätes 400 angezeigt werden. Dadurch hat der Nutzer ohne Notwendigkeit eines Ausdruckens die erste nutzerbezogene individuelle Information 1 in besonders einfacher Weise in einem digitalen Datenformat erhalten.

Die vorstehenden Abläufe sind vorzugsweise so angelegt, dass sie bis auf das Übertragen des zugeordneten Codes 2 per Einscannen 17 und/oder NFC 17a durch einen Eingabebefehl ("virtueller Druckbefehl") durch den Dienstleister (z. B. einer Sprechstundenhilfe) selbststätig ausgelöst werden.

Die dem mobilen Endgerät 400 zur Verfügung gestellte erste nutzerbezogene individuelle Information 1 kann bei Bedarf in einem weiteren Verfahrensschritt auf das mobile Endgerät 400 heruntergeladen werden, siehe Schritt 21 und auf dem Speicher 404 abgespeichert werden. Vorzugsweise wird das Herunterladen 21 durch das Einscannen 17 bzw. das Übertragen 17a des Codes 2 automatisch initialisiert. Dadurch wird die erste nutzerbezogene individuelle Information 1 dauerhaft gespeichert. Der Nutzer kann im Anschluss daran frei über diese verfügen, unabhängig davon, ob die erste Information 1 noch auf dem Datenserver 200 gespeichert ist. Beispielsweise kann durch das Herunterladen der Information 1 die Zuordnung des Codes 2 zu der Information 1 aufgehoben werden.

Vorteilhafterweise wird die erste nutzerbezogene individuelle Information 1 nach der Zurverfügungstellung 20 oder dem vorzugsweise vollständigen Herunterladen 21 derselben vom Speicher 201 des Datenservers 200 dauerhaft gelöscht werden. Infolgedessen kann die erste Information 1 nicht mehr vom Datenserver 201 aufgerufen und dem mobilen Endgerät 400 zur Verfügung gestellt werden.

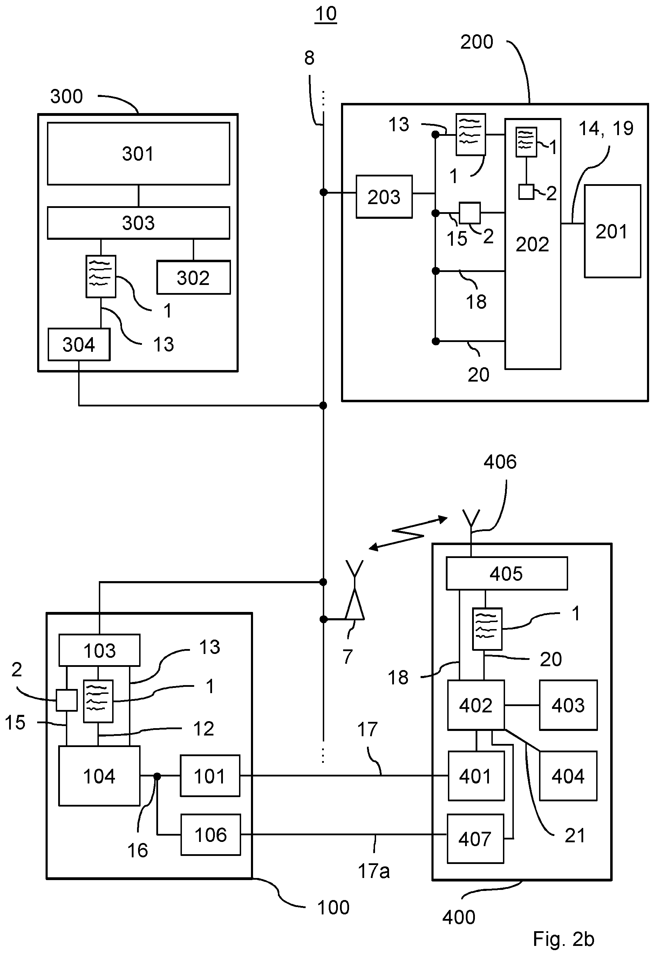

Fig. 2b zeigt eine Anordnung bzw. das Verfahren 10 gemäß dem zweiten Ausführungsbeispiel nach Fig. 1b zur papierlosen Zurverfügungstellung der ersten nutzerbezogenen individuellen Information 1 auf das mobiles Endgerät 400. Die Fig. 2b zeigt ebenfalls die an dem Verfahren 10 beteiligten Funktionseinheiten. Die Funktionseinheiten des zweiten Ausführungsbeispiels gemäß Fig. 2b haben denselben funktionalen Aufbau und Funktionen wie die Funktionseinheiten des ersten Ausführungsbeispiels gemäß Fig. 2a. In dem zweiten Ausführungsbeispiel gemäß Fig. 2b sind die Datenverarbeitungseinrichtung 300 des Dienstleisters und das Ausgabegerät 100 nicht in das Client-Server-Netzwerk 50 integriert. Vielmehr sind beide direkt mit über ihre Netzwerkschnittstellen 103 bzw. 304 direkt mit dem Internet 8 verbunden.

Der Verfahrensablauf des zweiten Ausführungsbeispiels gemäß Fig. 2b entspricht dem des ersten Ausführungsbeispiels gemäß Fig. 2a, mit dem Unterschied, dass die Datenverarbeitungseinrichtung 300 und das Ausgabegerät 100 direkt an das Internet 8 angeschlossen sind und somit direkt mit den weiteren Funktionselementen des Verfahrens 10 über das Internet 8 kommunizieren können. Zudem ist die auszutauschende Information 1 auf dem Speicher 302 der Datenverarbeitungseinrichtung 300 oder auf einem (in der Fig. 2b nicht dargestellten) Server gespeichert, welcher mit der Datenverarbeitungseinrichtung 300 kommuniziert.

Basierend auf der Übertragung 18 des zugeordneten Codes 2 und der dem individuellen Code 2 zugeordneten ersten Information 1 kann die Recheneinheit 202 des Datenservers 200 erkennen, von welchem Dienstleister der Nutzer die erste Information 1 erhält. Infolgedessen erzeugt der Datenserver 200 eine digitale Information, die eine Verknüpfung des Dienstleisters mit dem mobilen Endgerät 400 des Nutzers beinhaltet. Diese digitale Information kann beispielsweise im Speicher 201 gespeichert werden.

Auf Basis der digitalen Information und der Verknüpfung zwischen dem Dienstleister und dem mobilen Endgerät 400 des Nutzers kann eine Informationsaustauschstruktur zwischen dem Dienstleister und dem Nutzer erzeugt werden. Diese Informationsaustauschstruktur kann insbesondere ein Kalendersystem zur Terminvereinbarung und/oder ein Dokumentenaustauschsystem z. B. zum Austausch von Laborbefunden sein. Hierdurch kann auch nach der Zurverfügungstellung 20 und dem Herunterladen 21 der ersten nutzerbezogenen individuellen Information 1 ein erweiterter Informationsaustausch zwischen dem Dienstleister und dem Nutzer ermöglicht werden.

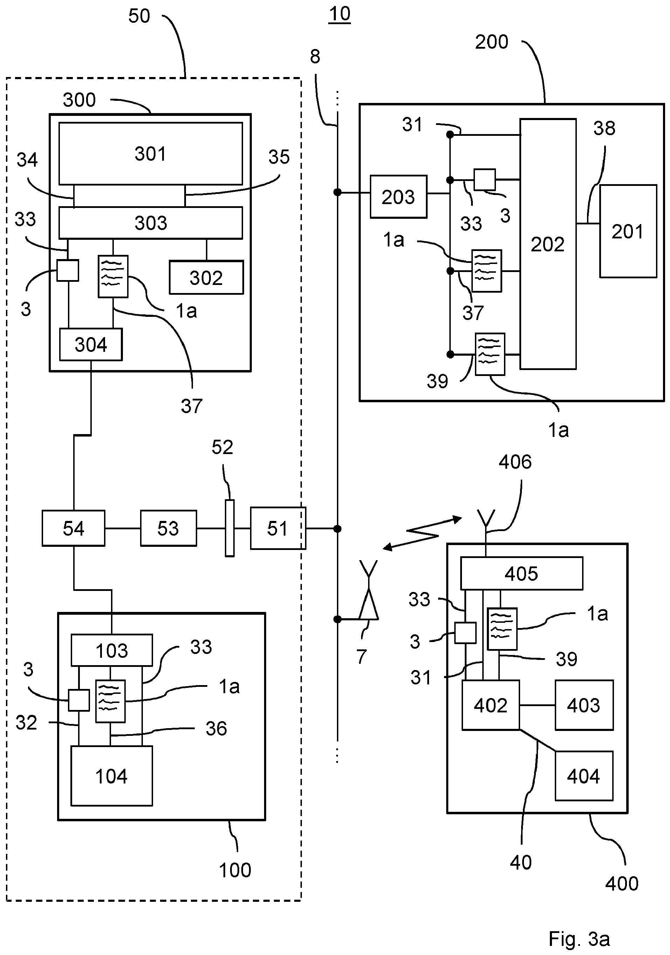

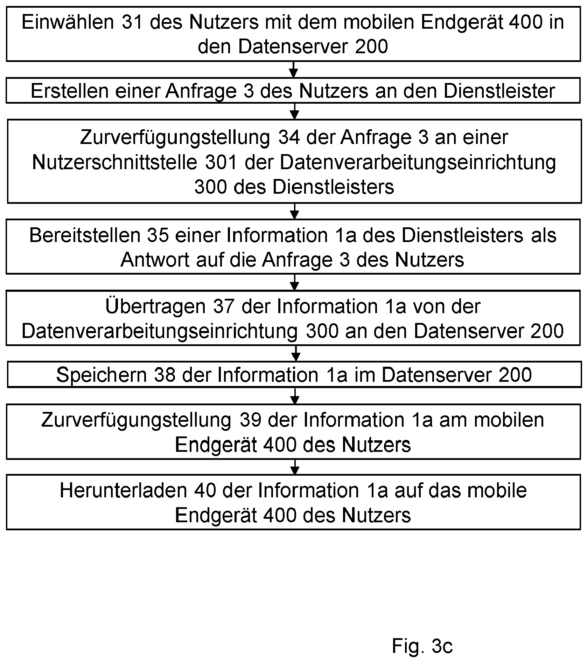

Weitere Merkmale der Anordnung bzw. des Verfahrens 10 gemäß dem ersten Ausführungsbeispiel nach Fig. 1a für die papierlose Zurverfügungstellung einer zweiten nutzerbezogenen individuellen Information 1a des Dienstleisters als Antwort auf eine nutzerbezogene individuelle Anfrage 3 des Nutzers auf das mobiles Endgerät 400 des Nutzers werden anhand der Fig. 3a und 3c näher beschrieben. An diesen weiteren Verfahrensschritten sind die aus den Fig. 2a, 2b und 3a bekannten Funktionseinheiten, das Ausgabegerät 100, die Datenverarbeitungseinrichtung 300, der Datenserver 200 sowie das mobile Endgerät 400, beteiligt. Die weiteren Verfahrensschritte teilen sich in dienstleisterseitige und nutzerseitige Verfahrensschritte auf.

Der Nutzer, welcher eine zweite nutzerbezogene individuelle Information 1a vom Dienstleister benötigt, wählt sich mit dem mobilen Endgerät 400 auf dem Datenserver 200 ein, siehe Schritt 31.

Auf dem Datenserver 200 ist mindestens eine digitale Information vorhanden, die eine Verknüpfung des Dienstleisters mit dem Nutzer beinhaltet. Dementsprechend kann die Recheneinheit 202 des Datenservers 200 den Nutzer einem Dienstleister zuordnen. Der Nutzer richtet über den Datenserver 200 eine nutzerbezogene individuelle Anfrage 3 an den Dienstleister. Beispielsweise kann der Nutzer über ein Menü des Datenservers auswählen, welche Information er vom Dienstleister benötigt. So kann der Nutzer insbesondere eine bestimmte zweite nutzerbezogene individuelle Information 1a, z. B. einen bestimmten Laborbefund, vom Dienstleister anfordern.

Nach der Erstellung der nutzerbezogenen individuellen Anfrage 3 wird diese an der Nutzerschnittstelle 301 der Datenverarbeitungseinrichtung 300 zur Verfügung gestellt, siehe Schritt 34. Hierdurch wird der Dienstleister über die nutzerbezogene individuelle Anfrage 3 informiert. Infolgedessen kann die Anfrage 3 vom Datenserver 200 an die Datenverarbeitungseinrichtung 300 übertragen werden, siehe Schritt 33, bzw. auf diese heruntergeladen werden. Beispielsweise wird die nutzerbezogene individuelle Anfrage 3 zuerst an das Ausgabegerät 100 übertragen, siehe Schritt 32. Im Anschluss daran wird die Anfrage 3 von der Recheneinheit 104 des Ausgabegerätes 100 an die Datenverarbeitungseinrichtung 300 übertragen. Alternativ kann die Anfrage 3 vom Datenserver 200 direkt an bzw. auf die Datenverarbeitungseinrichtung 300 übertragen bzw. heruntergeladen werden. Im Anschluss daran kann der Dienstleister auf die Anfrage 3 antworten, indem er eine zweite nutzerbezogene individuelle Information 1a bereitstellt, siehe Schritt 35.

Die bereitgestellte zweite Information 1a zur Beantwortung der Anfrage 3 kann sich im Client-Server-Netzwerk 50 befinden und kann hierbei beispielsweise auf dem Speicher 302 der Datenverarbeitungseinrichtung 300 oder auf dem Server 53 des Client-Server-Netzwerks 50 gespeichert sein. Alternativ kann sie direkt als Antwort auf die nutzerbezogene individuelle Anfrage 3 erstellt werden, ohne dass sie sich bereits im Client-Server-Netzwerk 50 befunden hat. Dies kann insbesondere bei Terminvereinbarungen der Fall sein.

Im Anschluss daran wird die zweite nutzerbezogene individuelle Information 1a von der Datenverarbeitungseinrichtung 300 an den Datenserver 200 übertragen, siehe Schritt 37, bzw. dort hochgeladen. Hierbei kann die Übertragung entweder direkt von der Datenverarbeitungseinrichtung 300 an den Datenserver 200 erfolgen. Alternativ kann die zweite Information 1a zuerst an das Ausgabegerät 100 übertragen werden, siehe Schritt 36. Die Recheneinheit 104 kann die zweite Information 1a in das fest vorgegebene digitale Datenformat konvertieren. Im Anschluss daran überträgt die Recheneinheit 104 die Information 1a an den Datenserver 200, siehe Schritt 37, bzw. lädt sie auf diesen hoch.

Daran anschließend wird die Information 1a vom Datenserver 200 dem mobilen Endgerät 400 zur Verfügung gestellt, siehe Schritt 39, bzw. über das Internet 8 an das mobile Endgerät 400 übertragen. Hierdurch wird die zweite nutzerbezogene individuelle Information 1a dem Nutzer zugänglich gemacht und kann beispielsweise auf dem Display 403 des mobilen Endgerätes 400 angezeigt werden.

Als weiterer Verfahrensschritt kann die zweite nutzerbezogene individuelle Information 1a auf das mobile Endgerät 400 heruntergeladen werden, siehe Schritt 40, bzw. auf dem mobilen Endgerät 400 gespeichert werden, vorzugsweise auf dem Speicher 404. Hierdurch kann der Nutzer auf die Information 1a zugreifen und zwar auch dann, wenn diese bereits im Datenserver 200 gelöscht wurde.

Vorteilhafterweise wird die Information 1a nach der Übertragung 37 derselben von der Datenverarbeitungseinrichtung 300 auf den Datenserver 200 auf dem Speicher 201 desselben gespeichert, siehe Schritt 38. Hierdurch wird die zweite Information 1a auf dem Datenserver 200 gesichert, bis diese vom mobilen Endgerät 400 abgerufen bzw. von diesem heruntergeladen wurde, siehe Schritt 40. Hierdurch können Informationen auf Basis der Verknüpfung in einfacher Weise vom Nutzer abgerufen werden.

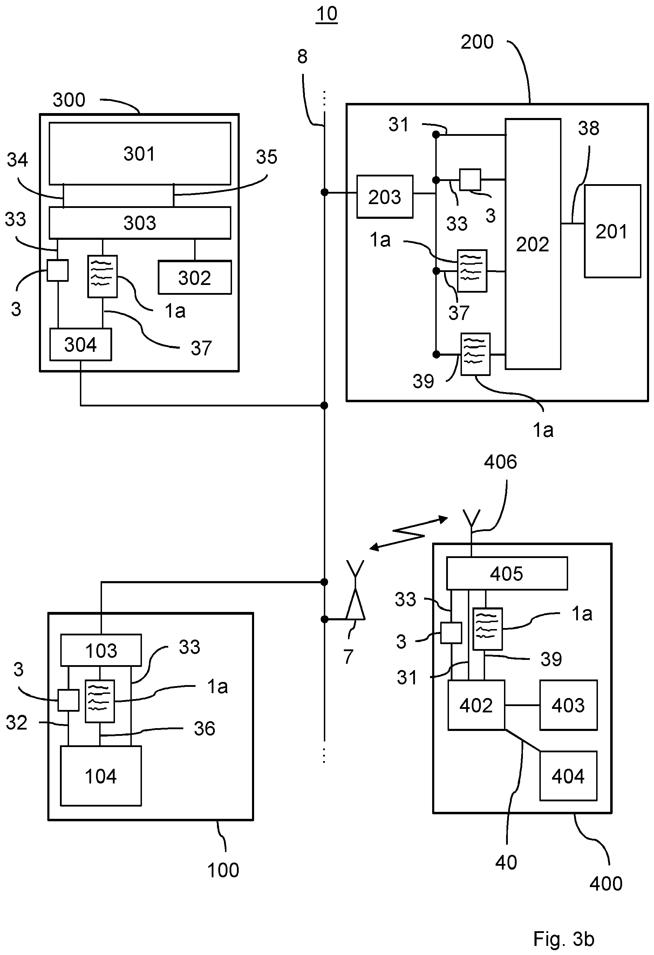

Fig. 3b die Anordnung bzw. das Verfahrens 10 gemäß dem zweiten Ausführungsbeispiel nach Fig. 1b für die papierlose Zurverfügungstellung der zweiten nutzerbezogenen individuellen Information 1a des Dienstleisters als Antwort auf die nutzerbezogene individuelle Anfrage 3 des Nutzers auf das mobiles Endgerät 400 des Nutzers. Hierbei sind die Datenverarbeitungseinrichtung 300 und das Ausgabegerät 100 wie in Fig. 2b direkt mit dem Internet 8 verbunden. Die Funktionseinheiten entsprechen den bekannten Funktionseinheiten aus Fig. 2a, 2b und 3a.

Die angeforderte zweite Information 1a ist in dem zweiten Ausführungsbeispiel gemäß Fig. 3b auf dem Speicher 302 der Datenverarbeitungseinrichtung 300 oder auf einem (in der Fig. 3b nicht dargestellten) Server, mit welchem die Datenverarbeitungseinrichtung kommuniziert, gespeichert. Die einzelnen Verfahrensschritte entsprechen denen des ersten Ausführungsbeispiels gemäß Fig. 3a mit dem Unterschied, dass die Datenverarbeitungseinrichtung 300 und das Ausgabegerät 100 direkt an das Internet 8 angeschlossen sind und somit direkt mit den weiteren Funktionselementen des Verfahrens 10 kommunizieren können.

Das Ausgabegerät 100 dient vorzugsweise ausschließlich der Weiterleitung der ersten und/oder zweiten nutzerbezogenen individuellen Information 1, 1a. Insbesondere verfügt das Ausgabegerät über keinerlei Druckfunktionen. Aufgrund dessen kann es als einfaches Aufstellgerät beispielsweise auf einer Empfangstheke des Dienstleisters nutzergerecht positioniert werden.

Insbesondere ist die Speicherung, siehe Schritte 14 und 38, der ersten und/oder zweiten nutzerbezogenen individuellen Information 1, 1a (siehe Fig. 2a sowie 3a) auf dem Datenserver 200 zeitlimitiert. Hierdurch kann sichergestellt werden, dass die erste und/oder zweite Information 1, 1a nach einer bestimmten Zeit gelöscht werden/wird. Nach Ablauf des Zeitlimits ist es somit nicht mehr möglich die entsprechende erste und/oder zweite Information 1, 1a aufzurufen, siehe Schritt 19, oder zur Verfügung zu stellen, siehe Schritte 20 und 39, oder herunterzuladen, siehe Schritte 21 und 40. Dadurch wird die Datensicherheit erheblich erhöht.

Zur weiteren Erhöhung der Datensicherheit kann die Kommunikation zwischen dem Client-Server-Netzwerk 50 und/oder der Datenverarbeitungseinrichtung 300 und/oder dem Ausgabegerät 100 und/oder dem Datenserver 200 und/oder dem mobilen Endgerät 400 verschlüsselt durchgeführt werden. Die Verschlüsselung und/oder Entschlüsselung der Kommunikation kann hierbei durch die Recheneinheiten 104, 304, 202, 402 der am Verfahren beteiligten Funktionseinheiten durchgeführt werden. Insbesondere kann hierfür eine SSL bzw. TSL 1.3 Verschlüsselung verwendet werden.

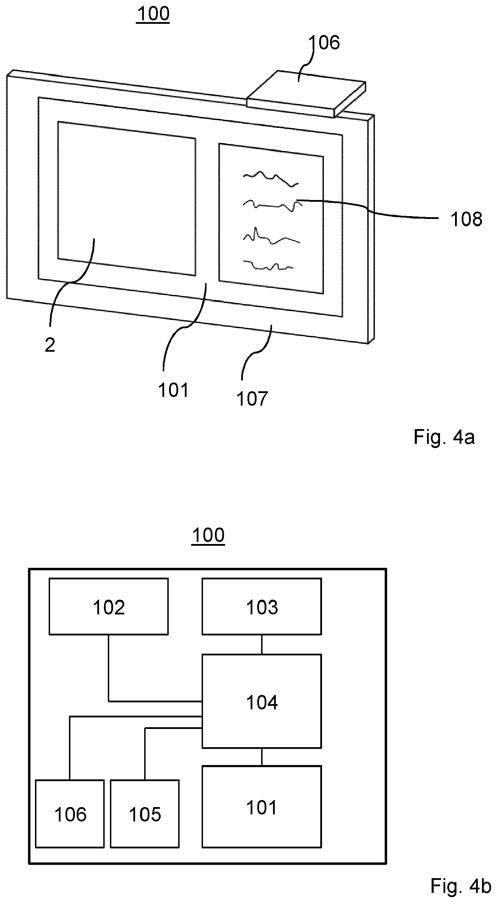

Fig. 4a zeigt eine beispielhafte Ausgestaltung des erfindungsgemäßen Ausgabegerätes 100 in perspektivischer Ansicht. Das Ausgabegerät 100 ist als einfaches Aufstellgerät, beispielsweise zur Positionierung auf einer Bedientheke, konzipiert und umfasst ein das Display 101 umfassendes Gehäuse 107. Im oberen Bereich des Gehäuses 107 kann sich das NFC-Modul 106 zur Übertragung des zugeordneten individuellen Codes 2 befinden. In dem dargestellten Beispiel kann das Display 101 berührungssensitiv sein, sodass das Display 101 zugleich eine Nutzerschnittstelle 105 darstellt. Alternativ kann gemäß einer nicht in den Figuren dargestellten Ausführungsform die Nutzerschnittstelle 105 beispielsweise als Tastatur und/oder als Maus ausgebildet sein. Mit der Nutzerschnittstelle 105 kann der Dienstleister, z. B. der Arzt, das Gerät bedienen und/oder das Gerät einrichten. Das Display 101 kann beispielsweise neben dem zugeordneten individuellen Code 2 einen Text 108 anzeigen. Der Text 108 kann z. B. eine Anleitung für den Nutzer zur Durchführung des Verfahrens 10 oder zur Übertragung 17, 17a des zugeordneten Codes 2 beinhalten.

Fig. 4b zeigt eine beispielhafte schematische Darstellung der Funktionselemente des Ausgabegerätes 100. Das Ausgabegerät 100 wird über eine Energieversorgung 102 mit Energie versorgt. Die Energieversorgung 102 kann hierbei ein Netzteil zum Anschluss an ein Stromnetzwerk oder alternativ ein Akkumulator oder eine Batterie sein. Die Recheneinheit 104 ist mit dem Display 101, dem NFC-Modul 106, der Nutzerschnittstelle 105 und der Netzwerkschnittstelle 103 verbunden. Die Netzwerkschnittstelle 103 ist beispielsweise ein Transceiver und verbindet das Ausgabegerät 100 mit einem Netzwerk, beispielsweise dem Client-Server-Netzwerk 50, und/oder mit dem Internet 8 drahtlos oder kabelgebunden.

Das erfindungsgemäße Ausgabegerät 100 ist dazu hergerichtet, das Verfahren 10 durchzuführen. Hierzu steuert die Recheneinheit 104 die einzelnen Verfahrensschritte, welche vom Ausgabegerät 100 ausgeführt werden. Das Ausgabegerät 100 kann als Rechnereinheit vorzugsweise nach der Art eines Druckers in ein Netzwerk integriert sein. Hierdurch kann das Ausgabegerät 100 z. B. mit einem Netzwerkkabel in das Netzwerk 50 integriert werden. Hierbei kann vorgesehen sein, dass sich mit dem Verbinden des Ausgabegerätes 100 mit dem Netzwerk die Funktionalität des Ausgabegerätes 100 selbsttätig initialisiert bzw. hochlädt. Vorzugsweise wird das Ausgabegerät als Client-Rechnereinheit in das Client-Server-Netzwerk 50 integriert.

Das erfindungsgemäße Verfahren 10 und das erfindungsgemäße Ausgabegerät 100 ermöglichen einen sowohl für den Nutzer als auch für den Dienstleister ganz besonders effektiven und einfachen papierlosen Austausch der ersten bzw. zweiten nutzerbezogenen individuellen Information 1, 1a vom Dienstleister an den Nutzer. Zudem ist die Anwendung bzw. die Inbetriebsetzung des erfindungsgemäßen Ausgabegeräts 100 für das dienstleisterseitige Personal besonders einfach, sodass hierfür eine hohe Akzeptanz erzeugt werden kann. Die Erfindung stellt daher einen ganzen entscheidenden Beitrag zu dem einschlägigen Stand der Technik dar.

Es wird ausdrücklich darauf hingewiesen, dass auch die Kombination von Einzelmerkmalen sowie Untermerkmalen als erfindungswesentlich und vom Offenbarungsgehalt der Anmeldung umfasst anzusehen sind.

### BEZUGSZEICHENLISTE

- 1: Information
- 1a: Information
- 2: Code
- 3: Anfrage
- 7: Funkmast
- 8: Internet

- 10: Verfahren
- 12: Übertragung
- 13: Übertragung
- 14: Speicherung
- 15: Übertragung
- 16: Ausgabe
- 17: Scanvorgang
- 17a: Übertragung
- 18: Übertragung
- 19: Aufruf
- 20: Zurverfügungstellung
- 21: Herunterladen

- 31: Einwählen
- 32: Übertragung
- 33: Übertragung
- 34: Zurverfügungstellung
- 35: Bereitstellen
- 36: Übertragung
- 37: Übertragung
- 38: Speicherung
- 39: Zurverfügungstellung
- 40: Herunterladen

- 50: Client-Server-Netzwerk
- 51: Router
- 52: Firewall
- 53: Server
- 54: Switch
- 56: Drucker

- 100: Ausgabegerät
- 101: Display
- 102: Energieversorgung
- 103: Netzwerkschnittstelle
- 104: Recheneinheit
- 105: Nutzerschnittstelle
- 106: NFC-Modul
- 107: Gehäuse
- 108: Text

- 200: Datenserver
- 201: Speicher
- 202: Recheneinheit
- 203: Netzwerkschnittstelle

- 300: Datenverarbeitungseinrichtung
- 301: Nutzerschnittstelle
- 302: Speicher
- 303: Recheneinheit
- 304: Netzwerkschnittstelle

- 400: Endgerät
- 401: Kamera
- 402: Recheneinheit
- 403: Nutzerschnittstelle
- 404: Speicher
- 405: Netzwerkschnittstelle
- 406: Antenne
- 407: NFC-Modul

## Patentansprüche

1. Verfahren (10) zur papierlosen Bereitstellung einer ersten nutzerbezogenen individuellen Information (1) von einer digitalen Datenverarbeitungseinrichtung (300) auf ein mobiles Endgerät (400) eines Nutzers, wobei die Bereitstellung über einen vorzugsweise netzwerkexternen Datenserver (200), insbesondere Cloudserver, und ein Ausgabegerät (100) erfolgt, umfassend:
Bereitstellen der ersten nutzerbezogenen individuellen Information (1) in einem fest vorgegebenen digitalen Datenformat für eine Übertragung auf das mobile Endgerät (400) des Nutzers;
wobei auf einen Ausführungsbefehl an der digitalen Datenverarbeitungseinrichtung (300) Folgendes ausgelöst wird:
Übertragen (13) der ersten nutzerbezogenen individuellen Information (1) von der Datenverarbeitungseinrichtung (300) an den Datenserver (200);
Speichern (14) der ersten nutzerbezogenen individuellen Information (1) im Datenserver (200);
Bereitstellen eines individuellen optischen und/oder per Nahbereichsfunkschnittstelle auslesbaren Codes (2), insbesondere eines QR-Codes oder Barcodes, im Datenserver (200);
Zuordnen des individuellen Codes (2) zu der im Datenserver (200) gespeicherten ersten nutzerbezogenen individuellen Information (1);
Übertragen (15) bzw. Zurverfügungstellung des zugeordneten individuellen Codes (2) von dem Datenserver (200) an das bzw. dem Ausgabegerät (100); und
Ausgabe (16) des zugeordneten individuellen Codes (2) an einem Display (101) zum Einscannen (17) und/oder an einem NFC-Modul (106) des Ausgabegeräts (100) zum Übertragen (17a);
wobei durch das Einscannen (17) des zugeordneten individuellen Codes (2) durch das mobile Endgerät (400) des Nutzers am Display (101) des Ausgabegeräts (100) oder das Übertragen (17a) des zugeordneten individuellen Codes (2) mittels NFC (Near Field Communication) -Technik vom NFC-Modul (106) des Ausgabegeräts (100) auf das mobile Endgerät (400) des Nutzers Folgendes ausgelöst wird:
Übertragen (18) einer auf den zugeordneten individuellen Code (2) bezogenen Anfrage vom mobilen Endgerät (400) des Nutzers an den Datenserver (200);
Aufruf (19) der dem individuellen Code (2) zugeordneten, im Datenserver (200) gespeicherten, ersten nutzerbezogenen individuellen Information (1);
Zurverfügungstellung (20) der aufgerufenen, dem individuellen Code (2) zugeordneten, im Datenserver (200) gespeicherten ersten nutzerbezogenen individuellen Information (1) am mobilen Endgerät (400) des Nutzers.

2. Verfahren nach Anspruch 1, **dadurch gekennzeichnet, dass** die zur Verfügung gestellte, dem individuellen Code (2) zugeordnete, im Datenserver (200) gespeicherte, erste nutzerbezogene individuelle Information (1) auf das mobile Endgerät (400) des Nutzers heruntergeladen (21) wird.

3. Verfahren nach Anspruch 1 oder 2, **dadurch gekennzeichnet, dass** die Übertragung der ersten nutzerbezogenen individuellen Information (1) von der digitalen Datenverarbeitungseinrichtung (300) an den Datenserver (200) über das Ausgabegerät (100) erfolgt.

4. Verfahren (10) nach einem der vorhergehenden Ansprüche, **dadurch gekennzeichnet, dass** die erste nutzerbezogene individuelle Information (1) nach der Zurverfügungstellung (20) oder dem Herunterladen (21) der ersten nutzerbezogenen individuellen Information (1) im Datenserver (200) durch den Verfahrensablauf selbsttätig gelöscht wird.

5. Verfahren (10) nach einem der vorhergehenden Ansprüche, **dadurch gekennzeichnet, dass** der zugeordnete individuelle Code (2) auf dem Datenserver (200) ausschließlich der gespeicherten, ersten nutzerbezogenen individuellen Information (1) in dem fest vorgegebenen digitalen Datenformat zugeordnet ist.

6. Verfahren (10) nach einem der vorhergehenden Ansprüche, **dadurch gekennzeichnet, dass** der Datenserver (200) den individuellen Code (2) fortwährend ändert.

7. Verfahren (10) nach einem der vorhergehenden Ansprüche, **dadurch gekennzeichnet, dass** der zugeordnete individuelle Code (2) nach der Zurverfügungstellung (20) oder dem Herunterladen (21) der ersten nutzerbezogenen individuellen Information (1) nicht mehr der ersten nutzerbezogenen individuellen Information (1) zugeordnet ist und für eine andere nutzerbezogene individuelle Information eines anderen Nutzers oder desselben Nutzers bereitgehalten wird, oder
der zugeordnete individuelle Code (2) nur einmal gültig ist.

8. Verfahren (10) nach einem der Ansprüche 2 - 7, **dadurch gekennzeichnet, dass** das Herunterladen (21) der ersten nutzerbezogenen individuellen Information (1) auf das mobile Endgerät (400) durch das Einscannen (17) oder das Übertragen mittels NFC-Technik des zugeordneten individuellen Codes (2) initialisiert wird.

9. Verfahren (10) nach einem der vorhergehenden Ansprüche, **dadurch gekennzeichnet, dass** durch das Einscannen (17) oder das Übertragen (17a) mittels NFC-Technik des zugeordneten individuellen Codes (2) eine digitale Information erzeugt wird, die eine Verknüpfung des Dienstleisters mit dem mobilen Endgerät (400) des Nutzers beinhaltet,
wobei vorzugsweise auf Basis der Verknüpfung eine Informationsaustauschstruktur zwischen dem Dienstleister und dem mobilen Endgerät (400) des Nutzers erzeugt wird.

10. Verfahren (10) nach Anspruch 9, **dadurch gekennzeichnet, dass** auf Basis der Verknüpfung folgende Verfahrensschritte durchgeführt werden:
Einwählen (31) des Nutzers mit dem mobilen Endgerät (400) in den Datenserver (200);
Erstellen einer nutzerbezogenen individuellen Anfrage (3) des Nutzers an den Dienstleister;
wobei durch das Erstellen der nutzerbezogenen individuellen Anfrage (3) des Nutzers eine Zurverfügungstellung (34) der nutzerbezogenen individuellen Anfrage (3) des Nutzers an einer Nutzerschnittstelle (301) der Datenverarbeitungseinrichtung (300) des Dienstleisters ausgelöst wird;
Bereitstellen (35) einer zweiten nutzerbezogenen individuellen Information (1a) des Dienstleisters als Antwort auf die nutzerbezogene individuelle Anfrage (3) des Nutzers;
wobei durch das Bereitstellen (35) der nutzerbezogenen individuellen Anfrage (3) Folgendes ausgelöst wird:
Übertragen (37) der zweiten nutzerbezogenen individuellen Information (1a) von der Datenverarbeitungseinrichtung (300) an den Datenserver (200);
Zurverfügungstellung (39) der zweiten nutzerbezogenen individuellen Information (1a) am mobilen Endgerät (400) des Nutzers,
wobei vorzugsweise die von der Datenverarbeitungseinrichtung (300) an den Datenserver (200) übertragene zweite nutzerbezogene individuelle Information (1a) im Datenserver (200) gespeichert wird.

11. Verfahren (10) nach einem der vorhergehenden Ansprüche, **dadurch gekennzeichnet, dass** die erste nutzerbezogene individuelle Information (1) und/oder die nutzerbezogene individuelle Anfrage (3) und/oder die zweite nutzerbezogene individuelle Information (1a) auf dem Ausgabegerät (100) nicht gespeichert werden/wird.

12. Verfahren (10) nach einem der vorhergehenden Ansprüche, **dadurch gekennzeichnet, dass** die Speicherung der ersten und/oder zweiten nutzerbezogenen individuellen Information (1, 1a) auf dem Datenserver (200) zeitlimitiert ist.

13. Verfahren (10) nach einem der vorhergehenden Ansprüche, **dadurch gekennzeichnet, dass** die Kommunikation zwischen der Datenverarbeitungseinrichtung (300) und/oder dem Ausgabegerät (100) und/oder dem Datenserver (200) und/oder dem mobilen Endgerät (400) zumindest teilweise verschlüsselt durchgeführt wird, und/oder
die erste und/oder zweite nutzerbezogene individuelle Information (1, 1a) auf dem Datenserver (200) verschlüsselt abgespeichert wird.

14. Verfahren (10) nach einem der vorhergehenden Ansprüche, **dadurch gekennzeichnet, dass** sich das Ausgabegerät (100) und die Datenverarbeitungseinrichtung (300) innerhalb eines vorzugsweise lokalen Netzwerks, vorzugsweise eines Client-Server-Netzwerks (50), befinden, und/oder
sich das Ausgabegerät (100) selbstständig initialisiert.

15. Ausgabegerät (100) zur Darstellung eines einer ersten nutzerbezogenen individuellen Information (1) zugeordneten individuellen Codes (2), umfassend:
ein Gehäuse (107),
eine Netzwerkschnittstelle (103),
ein Display (101) und/oder ein NFC-Modul (106), und
eine Recheneinheit (104),
**dadurch gekennzeichnet, dass** das Ausgabegerät (100) zur Durchführung des Verfahrens (10) nach einem der vorhergehenden Ansprüche hergerichtet ist.

16. Ausgabegerät (100) nach Anspruch 15, **dadurch gekennzeichnet, dass** das Ausgabegerät (100) eine Rechnereinheit, vorzugsweise eine Client-Recheneinheit, innerhalb des Netzwerks, vorzugsweise des Client-Server-Netzwerks (50), ist.
